# EUROPEAN PATENT APPLICATION

(11) **EP 3 556 481 A1**
(43) Date of publication of application: **23.10.2019**
(21) Application number: 19170349.5
(22) Date of filing: 18.04.2019
(51) Int. Cl.: B08B 9/08, B28C 5/42, B01F 15/00, B25J 11/00, B05B 15/60

(54) **APPARATUS AND METHOD TO CLEAN AN OPERATING MACHINE SUCH A CEMENT MIXER, A TRUCK MIXER OR SUCHLIKE**

(30) Priority: 18.04.2018 IT 201800004675; 18.04.2018 IT 201800004679
(71) Applicant: Le Officine Riunite - Udine SpA, 33030 Basaldella di Campoformido (UD) (IT)
(72) Inventor: Salvadori, Renzo, 53036 Poggibonsi (IT)
(74) Representative: Petraz, Gilberto Luigi

(57) **Abstract**

Method for cleaning an operating machine (21), such as a cement mixer, comprising a rotatable drum (36) having an internal surface and in which drum (36) a series of spirals (61) for moving material are positioned, integral with the drum (36) and defining a spirals positioning profile. The method comprises at least one cleaning step that provides at least a sub-step of introducing and advancing, inside the rotatable drum (36), a delivery head (30), and at least a sub-step of retracting and extracting the delivery head (30) from the drum (36), wherein the delivery head (30) is moved according to at least three degrees of freedom so as to follow, a cleaning path inside the drum (36), wherein said cleaning path substantially reproduces the shape of the spirals positioning profile, progressively assuming a coordinated position in the vicinity of the internal profile (62) along the cleaning path.

## Description

### FIELD OF THE INVENTION

The present invention concerns an apparatus and a method to clean, in particular internal washing, an operating machine, such as a cement mixer, a truck mixer, or suchlike, therefore, in particular, an operating machine provided with a rotatable drum. The following description will refer, by way of a non-restrictive example, to the application of the present cleaning apparatus and method to a truck mixer.

### BACKGROUND OF THE INVENTION

As is known, truck mixers are operating machines for the construction industry that have the function of transporting and mixing together the components of mortar or concrete. Truck mixers comprise a container, called a barrel or drum, where the elements to be mixed, for example water, sand, gravel and binders, are poured. Inside the drum there are a series of mixing spirals which increase the mixing capacity of the mixture during the rotation, performed in a suitable manner by means of a motor which rotates the drum around its longitudinal axis.

It is also known that periodically the drum of the truck mixer must undergo internal cleaning operations, for example washing, to remove the residues of materials that harden after the mixing. The residual material tends to deposit on the entire internal surface of the container and its removal is not always easy, above all in deposit zones between the mixing spirals, above all in the direction of rotation of the drum.

One known washing method consists in introducing water, possibly with added gravel, stones or abrasive materials, into the drum and rotating the drum with the water or the mixture of water and gravel, or stones, inside it. This method, although simple to actuate, does not allow to obtain an effective cleaning of the internal surface of the drum, above all in the zones in which the residual material is deposited or is pressed more, that is, in the corner zones defined between the mixing spirals.

There is also an apparatus to wash the drum which substantially comprises a shaft which allows to lift or lower an extendable arm which is inserted inside the drum. The extendable arm is provided with a head to deliver pressurized water, delivered through nozzles inclined toward an entrance aperture of the drum

The extendable arm is also connected to the shaft so that it can rotate with respect thereto around a horizontal axis of rotation, so as to be able to enter the drum in a position aligned with the longitudinal axis of rotation of the drum.

The extendable arm is first inserted along the longitudinal axis of rotation of the drum up to near the bottom of the drum, then it is recalled, always along the longitudinal axis. During the return or recall step, the delivery of pressurized water is commanded through the nozzles disposed on the delivery head and inclined toward the entrance aperture of the drum. During the operation of delivering pressurized water, the drum of the truck mixer is made to rotate, so that the entire internal surface of the drum is cleaned.

However, even with said known cleaning apparatus, an effective cleaning of the most critical zones where the hardened material is deposited is not guaranteed, as the extendable arm, being directed substantially along the axis of rotation of the drum, is rather distanced from the zones to be cleaned, therefore substantially the jet of water delivered by the head has to travel a rather long distance before reaching the surface to be washed, even 1-1.5 m.

Naturally, the delivery of the water should instead occur at a close distance from the surface to be cleaned, in order to ensure an effective cleaning of all zones of the internal surface of the drum.

Another limitation of the known apparatus is that the extendable cleaning arm only operates during the travel of extraction from the drum, with the nozzles directed toward the aperture of the drum, therefore some zones of the drum are difficult to reach, for example the zones hidden between one spiral and the other.

Overall, therefore, known cleaning apparatuses use high quantities of washing water, they cannot reach the most critical zones where hardened material is present, for example the angle between the spirals and the internal profile of the drum in the mixing rotation direction of the drum, and require long intervention times.

Another limitation of known cleaning apparatuses and systems is that often the geometric and production characteristics of the internal surface of the drum can vary between different types of truck mixers, for example internal profile of the drum, disposition and type of spirals, pitch or distance between one spiral and the other, or others. Therefore, the cleaning apparatuses, in order to perform an effective cleaning operation, should be able to evaluate these geometric and production characteristics, for example the internal profile of the drum.

Another limitation of known cleaning apparatuses or systems, for example of the type described above, is that the washing water delivery head is provided with water delivery nozzles which are substantially positioned in a single direction, therefore without the possibility of delivering water in different directions and therefore in different critical zones of the internal profile of the drum, where there is a greater concentration of residues of hardened material to be removed.

Another limitation of known cleaning apparatuses and systems, for example of the type described above, is that the extendable arm which is inserted inside the drum is provided with a single rotation joint with respect to the lifting and lowering shaft and, furthermore, the joint is substantially aligned with the shaft.

The provision of a single joint limits the flexibility of use of the extendable arm and determines an excessive angular travel thereof, especially of the rear part, when it is rotated.

Another limitation of the cleaning apparatus as described above is that, for transport, the extendable arm for delivering the washing water has to be dismantled from the shaft, and the parts are substantially transported separately to then be assembled at the time of use.

Documents WO-A-03/061925 and US-A-2007/079852 describe known apparatuses for removing residual concrete from the drum of a truck mixer.

US-A-5,460,193 describes a device for cleaning the walls of a container, in particular in the oil sector, or for storing grains or flour, or for atomizing towers, tanks for boats or trucks, or even cooking ovens for foods.

Document WO-A-97/36697 describes an apparatus and a computer controlled method for cleaning hygienic environments, fermenters, reactors, containers or tanks for the production, transport, storage of products, such as nutrients, beverages, chemical products or oily products.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

There is therefore the need to perfect an apparatus for cleaning an operating machine which can overcome at least one of the disadvantages of the state of the art.

One purpose of the present invention is to perform a deep cleaning of the drum of the operating machine in a short time, using little water and optimally washing even critical zones such as for example the angular zones defined between the spirals and the internal profile of the drum, before the mixed material solidifies, quickly and using limited quantities of water, for example about 350/500 liters of water for a washing time of about 2/3 minutes.

Another purpose of the present invention is to perfect a method for cleaning, in particular washing, an operating machine such as a cement mixer, a truck mixer, or suchlike, in which, advantageously, the distance between the cleaning fluid delivery head and the internal surface of the drum to be cleaned is optimal for any zone of the internal profile of the drum, therefore in particular in which the cleaning fluid delivery head is at a minimum or at least a reduced distance from the zones of the internal profile of the drum to be cleaned, when compared with the distance at which traditional apparatuses operate.

Another purpose of the present invention is to perfect a cleaning method which takes into account the internal characteristics of the drum to be cleaned, hence its internal profile, the disposition and/or type of mixing spirals, the reciprocal distance between the spirals, or others, and therefore allows to adapt the position of the cleaning fluid delivery head with respect to these internal characteristics.

Another purpose of the present invention is to perfect an effective and rapid cleaning method which maintains the integrity of the internal surface of the drum, hence the integrity of the spirals and surfaces defined between the mixing spirals.

Another purpose of the present invention is to perfect an effective and rapid cleaning method which can effectively and precisely reach substantially any zone or hidden angle defined in a spiral or in a zone comprised between one spiral and the other, therefore where there is a higher possibility of accumulation of material to be removed.

Another purpose of the present invention is to provide a cleaning apparatus, in particular internal washing, for an operating machine such as a cement mixer, a truck mixer, or suchlike, which is able to regulate the position of the extendable arm which carries the washing fluid delivery head according to several degrees of freedom, so as to correctly and effectively follow the internal profile or internal shape of the drum of the mobile operating machine, in particular the cement mixer or truck mixer.

Another purpose of the present invention is to provide a cleaning apparatus, in particular internal washing, for an operating machine such as a cement mixer, a truck mixer, or suchlike, which can be used both during the step of entry of the extendable arm into the drum, and also during the step of its extraction or recall outside the drum.

Another purpose of the present invention is to provide a cleaning apparatus, in particular internal washing, for an operating machine such as a cement mixer, a truck mixer, or suchlike, which is provided with means for the automatic recognition of the type of operating machine and therefore the internal characteristics or internal morphology of the rotatable drum, so as to adapt, advantageously, the cleaning operations to the characteristics or internal morphology.

Another purpose of the present invention is to provide a cleaning apparatus, in particular internal washing, for an operating machine such as a cement mixer, a truck mixer, or suchlike, which provides a precise setting of the positioning of the extendable arm as a function of the type of operating machine detected.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

According to the above purposes, one purpose of the invention is a method for cleaning, in particular internal washing, an operating machine, such as a cement mixer, a truck mixer, or suchlike, comprising a drum rotatable around a determinate axis of rotation and having an internal surface defined by the axial-symmetric rotation of an internal profile of the drum around the axis and in which drum a series of spirals for moving material are positioned, integral with the drum and defining a spirals positioning profile coordinated with the internal profile of the drum; the method providing to deliver at least one cleaning fluid into the drum.

According to one aspect of the invention, the method comprises at least one cleaning step that uses a cleaning apparatus provided with an extendable arm provided with at least one delivery head, able to deliver said at least one cleaning fluid into said drum, wherein said cleaning step provides at least a sub-step of introducing and advancing said extendable arm, inside the rotatable drum, and at least a sub-step of retracting and extracting the extendable arm from the drum; wherein the delivery head of the extendable arm is moved according to at least three degrees of freedom so as to follow, at least in one of said sub-steps, a cleaning path inside the drum, at least during which the at least one cleaning fluid is delivered, wherein the cleaning path reproduces substantially the shape of the spirals positioning profile, said delivery head progressively assuming a coordinated position in the vicinity of the internal profile along the cleaning path; the movement according to the at least three degrees of freedom of the delivery head of the extendable arm along the cleaning path is controlled and managed by a control unit.

The delivery head can deliver the cleaning fluid on the outward and return travel along the cleaning path, both in the step where the extendable arm is introduced and advanced, and also in the step where the extendable arm is retracted and extracted.

The delivery head can follow the cleaning path both in the step where the extendable arm is introduced and advanced, and also in the step where the extendable arm is retracted and extracted.

The cleaning path can be followed by said delivery head with reference to a series of reference positions memorized in the control unit, able to control and manage the movement of the delivery head of the extendable arm according to the three degrees of freedom.

According to some embodiments, said cleaning paths predefined and memorized in said control unit are defined on the basis of the processing, by said control unit, of a series of reference positions inside said drum preliminarily detected, at least once for each type of operating machine, in a preparatory step of learning and acquiring said reference positions by acquisition means associated with said delivery head and which are moved inside said drum to acquire said positions.

According to some embodiments, said method comprises said preparatory learning and acquiring step, in which a preliminary setting of said reference positions is performed, introducing said extendable arm inside the drum and setting, manually or automatically, each of said positions.

According to some embodiments, before or during said cleaning step it is provided that said control unit verifies that said delivery head follows the specific cleaning path selected by said control unit on the basis of signals received from one or more sensors associated with said delivery head and able to provide a signal correlated to the reciprocal position between said delivery head and said series of positions.

According to some embodiments, said method comprises, before the cleaning step, a step of positioning, aligning and centering said extendable arm with respect to said operating machine so that a projection of the axis of rotation of said drum is centrally aligned with said extendable arm with respect to a longitudinal axis of vertical development of said cleaning apparatus, so that said extendable arm is located at a height coordinated with said drum for the purposes of cleaning and so that said cleaning apparatus is at a predefined distance from said drum compatible with said extendable arm for the purposes of cleaning.

According to some embodiments, said positioning, aligning and centering step is controlled and commanded by said control unit on the basis of signals received from one or more sensors associated with said cleaning apparatus and cooperating with mating indicators associated with said operating machine and in communication with said control unit.

The cleaning fluid can be delivered according to a plurality of different directions each of which can have its own defined angle of inclination, so as to reach critical zones associated with the spirals in the drum where material mixed inside the drum collects.

The cleaning fluid can be delivered in at least one front direction with a first defined angle, toward a first critical zone where material accumulates, defined between the internal profile of the drum and a rear surface of the spiral.

The cleaning fluid can be delivered in at least one rear direction with a second defined angle toward a second critical zone where material accumulates, defined between the internal profile of the drum and a front surface of the spiral.

The cleaning fluid can be delivered in at least a central direction with a third defined angle toward a zone of the internal profile of the drum defined centrally between successive spirals, between the first critical zone and the second critical zone.

The method can comprise a preliminary step of recognizing the type of operating machine, hence of selecting a specific cleaning path to be followed inside the drum as a function of the determinate type of operating machine recognized; the specific cleaning path can be selected from a plurality of predefined cleaning paths memorized in the control unit, each one specific for a determinate type of operating machine.

The drum can be rotatable around the axis during the movement of the delivery head along the cleaning path, and the simultaneous delivery of the cleaning fluid, for the internal cleaning of the drum at 360°.

At least during the sub-steps of said cleaning step, the delivery head can be moved along the cleaning path with a speed of advance and/or retraction synchronized with the speed of movement of the spirals defined by the rotation of the drum, so that the movement of said delivery head along the cleaning path is coordinated with the pitch of advance between two successive spirals.

According to some embodiments, the synchronization of the relative movement of said delivery head along said cleaning path with respect to the movement of said spirals defined by the rotation of said drum occurs by varying the speed of movement of said delivery head and/or the angular rotation speed of said drum.

According to some embodiments, said method provides to identify the beginning of two first spirals of said series of spirals with respect to the direction of introduction of said delivery head into said drum by means of sensors associated with said drum.

A further purpose of the invention is a cleaning apparatus, in particular internal washing, for an operating machine, such as a cement mixer, a truck mixer, or suchlike, comprising a drum rotatable around a determinate axis and having an internal surface defined by the axial-symmetric rotation of an internal profile of the drum around the axis and in which a series of spirals for moving material are positioned, integral with the drum and defining a spirals positioning profile coordinated with said internal profile of the drum. The apparatus comprises at least an extendable arm, provided with a delivery head to deliver a cleaning fluid, the delivery head is configured mobile according to at least three degrees of freedom, and at least a control unit, configured at least to determine a movement, according to said at least three degrees of freedom, both to introduce and advance the extendable arm inside the rotatable drum and also to retract and extract the extendable arm from the drum, in order to follow a cleaning path inside the drum; wherein said cleaning path reproduces substantially the shape of the spirals positioning profile, progressively assuming a coordinated position in the vicinity of the internal profile along the cleaning path

According to one aspect, a series of positions is memorized in said control unit in reference to which said control unit commands said extendable arm to follow said cleaning path.

According to some embodiments, the cleaning apparatus also comprises acquisition means associated with the delivery head in order to be moved inside said drum, wherein a plurality of predefined cleaning paths are memorized in said control unit, each of said memorized cleaning paths being specific for a determinate type of operating machine, said cleaning paths being defined on the basis of the processing, by said control unit, of a series of said reference positions inside said drum preliminarily detected, at least once for each type of operating machine, by means of said acquisition means associated with said delivery head which are moved inside said drum to acquire said positions; wherein said control unit is configured to move said delivery head along the specific cleaning path inside said drum selected as a function of a recognition of the type of operating machine and therefore of the type of rotatable drum.

According to some embodiments, said control unit is configured, on the basis of signals received from one or more sensors associated with said cleaning apparatus and cooperating with mating indicators associated with said operating machine, to position, align and center said extendable arm with respect to said operating machine so that a projection of the axis of rotation of said drum is centrally aligned with said extendable arm with respect to a longitudinal axis of vertical development of said cleaning apparatus, so that said extendable arm is located at a height coordinated with said drum for the purposes of cleaning and so that said cleaning apparatus is at a predefined distance from said drum compatible with said extendable arm for the purposes of cleaning.

According to some embodiments, said control unit is configured to identify the beginning of two first spirals of said series of spirals with respect to the direction of introduction of said delivery head into said drum by means of sensors associated with said drum and in communication with said control unit.

A further purpose of the invention is a program for computers that can be memorized in a computer-readable mean that contains the instructions that, once performed by a cleaning apparatus, determine the execution of a cleaning method

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the description or in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a three-dimensional view of a cleaning apparatus according to the invention, in particular for the internal washing of an operating machine, such as a cement mixer, a truck mixer, or suchlike;
- fig. 2 is a lateral view of a first operating position of the present cleaning apparatus;
- fig. 3 is a lateral view of a second operating position of the present cleaning apparatus;
- fig. 4 is a lateral view of another operating position of the present cleaning apparatus;
- fig. 5 is a lateral view of operating steps of the present cleaning apparatus;
- fig. 5a is a large-scale view of zone A of fig. 5;
- fig. 5b is a further large-scale view of a zone inside the operating machine during the cleaning operation;
- fig. 6 is a three-dimensional view of a part of the present cleaning apparatus;
- fig. 7 is a three-dimensional view from below of a zone of the present cleaning apparatus where a delivery head to deliver the cleaning fluid is provided;
- fig. 8 is a plan view of an operating situation of the present cleaning apparatus for cleaning several truck mixers;
- fig. 9 is a three-dimensional view of the delivery head of the present cleaning apparatus;
- fig. 10 is a three-dimensional and longitudinal section view of the present delivery head;
- fig. 11 is a three-dimensional and cross-section view of the present delivery head;
- fig. 12 is a front view of the present cleaning apparatus in a transport configuration;
- fig. 13 is a lateral view of the cleaning apparatus in a transport configuration.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

With reference to the attached drawings, embodiments of a cleaning apparatus 20 are described, which can be used in particular for cleaning, or washing, a truck mixer 21, or similar operating machine provided with a drum. Hereafter, with reference number 21 we indicate indifferently a truck mixer or, in general, an operating machine provided with a drum.

In some embodiments, the cleaning apparatus 20 comprises a support shaft, or column 22, extendable advantageously in a telescopic manner, and an extendable arm, or lance, 23 provided with at least one delivery head 30 to deliver a cleaning or washing fluid. The extendable arm 23 is mounted on the extendable shaft 22. The latter, therefore, is able to raise or lower the extendable arm, or lance, 23.

The extendable arm 23, in particular its delivery head 30, is advantageously mobile according to at least three degrees of freedom, that is to say X, Y and Z, that is, it can be angularly rotated with respect to the extendable shaft 22, it can be moved vertically thanks to the raising and lowering by the extendable shaft 22, and it can be moved longitudinally forward and backward, as will be evident from the following description.

In some embodiments, said truck mixer 21 comprises a drum 36 rotatable, by respective drive means 66, around an axis of rotation R so as to mix together the various components of the mortar or concrete, for example water, sand, gravel and binders.

The drum 36 comprises, as is known, spirals 61, suitably sized, shaped and reciprocally distanced in a suitable manner, to move the material present in the drum 36.

The drum 36 has an internal surface defined by the axial-symmetric rotation of an internal profile 62 of the drum 36 around said axis R.

The spirals 61 define a spirals positioning profile coordinated with said internal profile 62 of the drum 36, which, as can be seen in the drawings, can be defined by the line joining the top of the spirals which extend from the bottom of the drum 36.

The spirals 61, in a direction of rotation of the drum 36 around the axis R, mix the materials poured into the drum 36 and, in the other direction of rotation, assist the extraction of the mixed material from the drum 36.

In some embodiments, said extendable shaft 22 is directed along an axis Y, for example a substantially vertical axis.

In possible implementations, the extendable shaft 22 can comprise at least two telescopically associated parts, for example a first fixed part 24 and a second mobile part 25, able to translate with respect to said first fixed part 24 along said axis Y.

The mobile part 25 can translate upward or downward with respect to the fixed part 24 by means of a drive unit 26, for example an oil-dynamic drive unit.

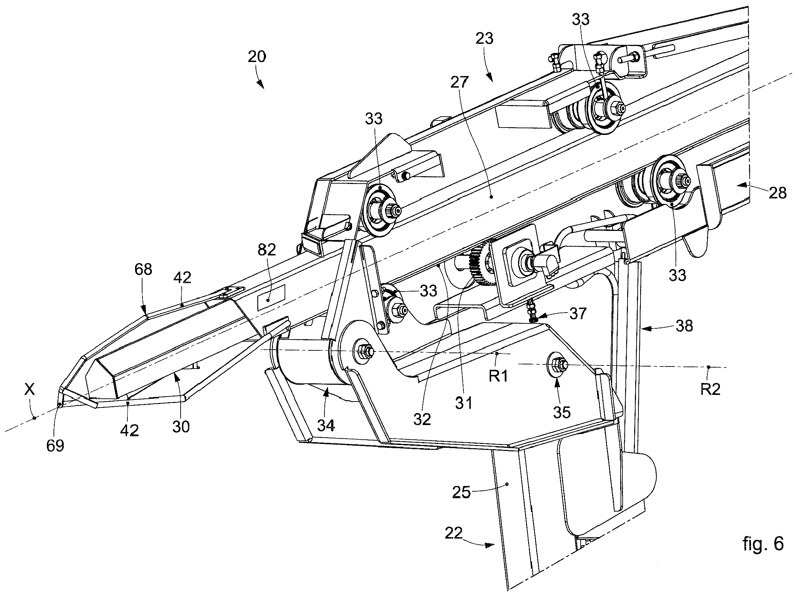

In some embodiments, the extendable arm 23 can comprise at least a first mobile segment 27 and a at least second fixed segment 28, wherein said first mobile segment 27 can translate with respect to the second fixed segment 28 by means of a corresponding motor 29 and in a determinate direction of extraction or retraction X, see also fig. 6.

The motor 29, which can be an electric motor, advantageously associated with an inverter, can be configured to rotate motion transmission means associated with said mobile segment 27, such as advantageously for example a pinion 31 able to engage on a rack 32 made on said mobile segment 27.

In order to ensure the correct linearity of the translation in direction X, in one direction or the other, the mobile segment 27 can slide along corresponding guides 33, for example rollers or suchlike.

In possible embodiments, the extendable arm 23 is connected to the mobile part 25 of the extendable shaft 22 by at least a pair of hinges 34 and 35, which allow it a certain rotation with respect to said extendable shaft 22 around an axis R1 and around an axis R2, respectively. Advantageously, the two hinges 34 and 35 can be selectively activated/deactivated, one alternatively to the other, depending on the needs of use or transport, as explained in detail below.

The axes of rotation R1 and R2 can both be, for example, horizontal and can be parallel to each other.

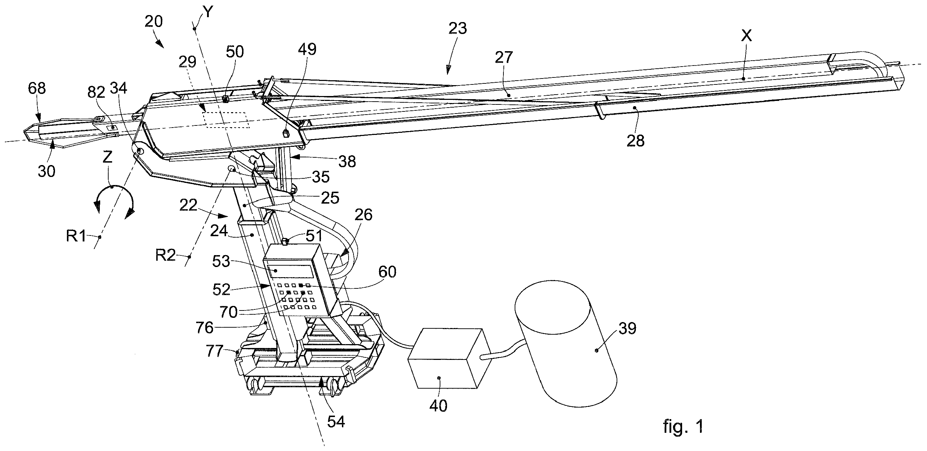

In particular, the first hinge 34 allows, during use, to rotate the extendable arm 23 with respect to the extendable shaft 22 to assume, for example, at least one operating position, see for example the operating positions of figs. 1 to 5.

The first rotation hinge 34, advantageously, is not directed along the axis Y of the extendable shaft 22, but is displaced forward, that is, toward the cleaning fluid delivery head 30.

At least in this first operating position, therefore, the first hinge 34 is positioned further forward, toward the delivery head 30, with respect to said second hinge 35, so that the axis R1 is offset forward with respect to the axis R2.

In this way, advantageously, the travel of the extendable arm 23 is limited when it is rotated around the axis R1, the delivery head 30 can be brought to a closer position to the truck mixer 21 and the cleaning of the inside of the drum 36 of the truck mixer 21 is performed much more effectively than that done by known cleaning apparatuses.

The rotation of the extendable arm 22 around this axis R1 is allowed when a clamping device 37 is released, see fig. 6, for example a manual device provided with a threaded pin associated with corresponding counter-threaded nuts, which normally clamps the rotation with respect to the first hinge 34.

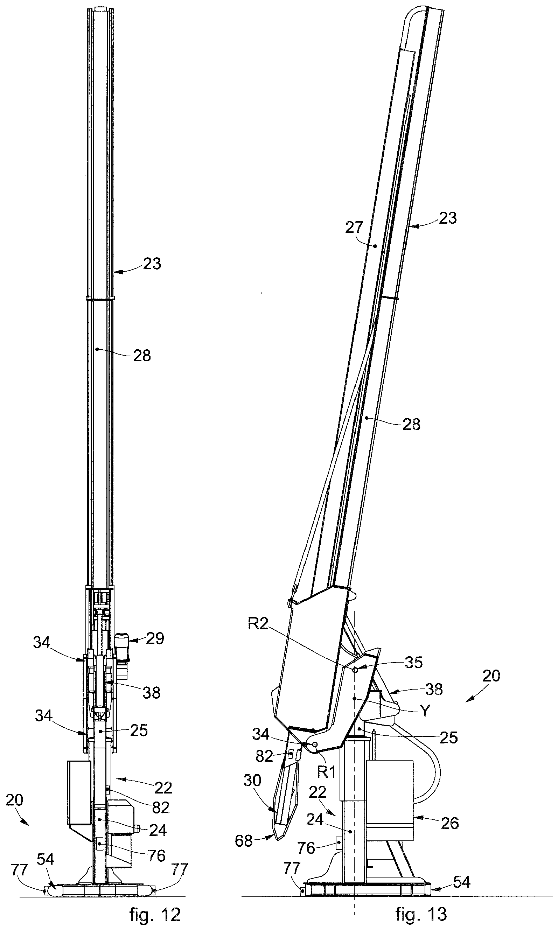

The second hinge 35 is directed substantially along the axis Y of the extendable shaft 22 and, when selectively released, allows to rotate the extendable arm 23 around said axis R2 from an operating position, see for example figs. 1 to 5, to a transport position, see for example fig. 12 and fig. 13, which has an extremely reduced bulk and is very compact, and in which the extendable arm 23 is substantially directed along the same axis Y of the extendable shaft 22 or is slightly inclined with respect thereto.

In the transport configuration, the mobile part 25 of the extendable shaft 22 is at least partly recessed in the fixed part 24, therefore the extendable shaft 22 is at the minimum height.

In this configuration, furthermore, abutment and positioning means could be provided in which to correctly insert the extendable arm 23 to keep it stably in the transport configuration.

The hinges 34 and 35 are advantageously selectively activated, so that they can be used respectively, during the cleaning operating steps, in which the extendable arm 23 is rotated around the axis R1 by means of the first hinge 34, or during the steps of preparation for transport, in which the extendable arm 23 can be rotated around the axis R2 by means of the second hinge 35.

The rotation of the extendable arm 23 around the axis R1 and/or around the axis R2 can be performed by a suitable rotation actuator 38.

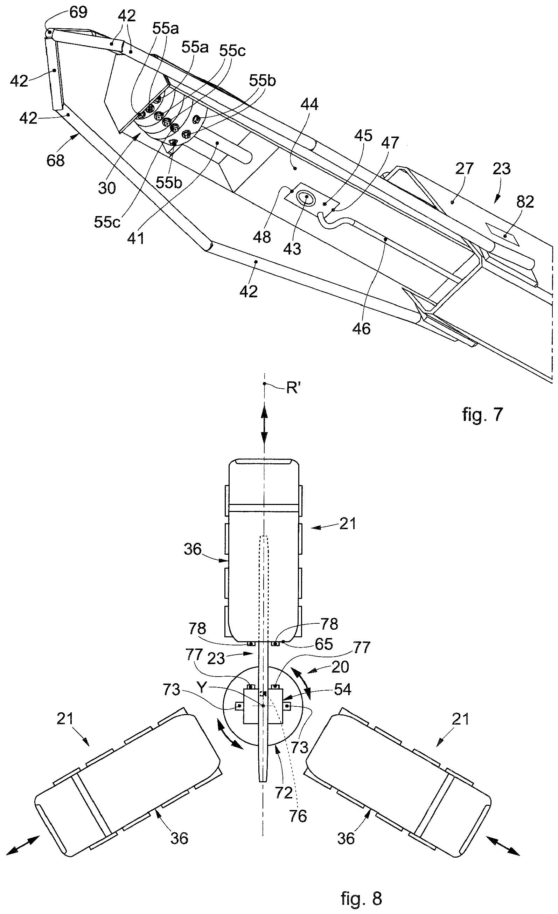

The cleaning fluid, for example water, advantageously pressurized, can be contained inside a receptacle 39 and can be removed from said receptacle 39 by a pumping unit 40 suitable to send it toward the delivery head 30 by means of a corresponding pipe 41, see in particular fig. 7.

The delivery head 30 is positioned at the end of the mobile segment 27 of the extendable arm 23 and can be provided with a protective frame 68, so as to prevent direct interferences between said delivery head 30 and the spiral 61.

The protective frame 68 can be provided with a series of bars 42 which converge in an end zone 69.

In further embodiments, which can be combined with all the embodiments described here, the delivery head 30, and/or the extendable arm 23 on which it is mounted, can also be configured rotatable on itself around an axis of rotation of its own.

In further embodiments, which can be combined with all the embodiments described here, the cleaning apparatus 20 can comprise acquisition means 43. In possible implementations, the acquisition means can be electromagnetic acquisition means, in particular they can be optical, optoelectronic or radio frequency electromagnetic acquisition means. Possible examples are a camera, a video camera, or comparable image and/or video acquisition means. Alternatively, other examples can be a barcode reader, a QR-code (Quick Response code) reader, or an RFID (Radio Frequency Identification) tag or NFC (Near Field Communication) tag reader, or suchlike. In other alternatives, the acquisition means 43 can be or include a laser-scanning device. In other alternatives, the acquisition means 43 can be or include a radar device. Hereafter, with the number 43, we will refer by way of a non-restrictive example to electromagnetic acquisition means of the optical type, for example in the form of a video camera, hereafter called briefly, but not in a limitative manner, video camera 43, see in particular fig. 7. However, the following description also applies to other possible embodiments of the acquisition means 43, for example according to the possible alternative implementations described above.

The video camera 43 can be configured to acquire information, such as images or video sequences, inside the drum 36. For example, the video camera 43 can acquire images or video sequences of the cleaning operations of the drum 36, or images or video sequences of the inside of the drum 36 before or in preparation for the cleaning, or other.

In possible variant embodiments, the video camera 43 can also be configured to detect and recognize the type of truck mixer 21. In other variant embodiments, the detection and recognition of the type of truck mixer 21 can be performed by additional acquisition means, different from said video camera 43, as for example described above.

In possible embodiments, said video camera 43, and possibly the other acquisition means described above as possible examples which, if necessary, can perform the detection and recognition of the type of truck mixer 21, are configured to cooperate in particular with a control unit 52, in particular an electronic programmable control unit, of the cleaning apparatus 20, providing the information detected.

In the control unit 52, a computer program can be installed that can be memorized in a computer-readable mean that contains the instructions that, once performed by the present cleaning apparatus, determine the execution of the cleaning method according to the embodiments described here.

The type of truck mixer 21 can for example be detected by the video camera 43 reading the license plate of the truck mixer 21. Alternatively or additionally, the type of truck mixer 21 can be detected by reading an RFID tag, a bar code, or suchlike.

In further embodiments, which can be combined with all the embodiments described here, the control unit 52 can comprise a pushbutton 60 to acquire the position of the extendable arm 23.

In further embodiments, which can be combined with all the embodiments described here, the cleaning apparatus 20 comprises commands 70 for positioning the extendable arm 23 and possibly at least said pushbutton 60 to acquire the position of the extendable arm 23. For example, the control unit 52 can possibly also comprise a series of manual commands 70, for example pushbuttons, keys or other, to displace the extendable arm 23 in the directions X, Y and for the rotation around the axis R1.

In further embodiments, which can be combined with all the embodiments described here, said video camera 43 can be positioned on the extendable arm 23, for example in correspondence with a support 44 located in the mobile segment 27 of the extendable arm 23 and in proximity to the delivery head 30.

The video camera 43 can be covered by a transparent protective sheet 45, for example made of glass, plastic or suchlike.

The transparent sheet 45 can be cleaned, continuously, when necessary or at pre-established intervals, by cleaning means 46 of said acquisition means 43, which can be activated selectively or automatically activated, or otherwise. For example, the cleaning means can be configured to deliver compressed air through a suitable pipe 46.

Preferably, the pipe 46 to deliver compressed air is located in proximity to a side 47 of the transparent sheet 45 opposite the side 48 where the video camera 43 is positioned, so that the delivery of compressed air does not interfere with the video camera 43.

The video camera 43, or other electromagnetic acquisition means, could also be cleaned with other cleaning means that is not an air-based device, in particular compressed air, for example a means or system provided with a suitable wiping element, or other.

In further embodiments, which can be combined with all the embodiments described here, the cleaning apparatus 20 can comprise at least a sensor 49 to detect the angular position or inclination of the extendable arm 23, that is, of its rotation around the axis R1 or the axis R2.

The sensor 49 to detect the inclination of the extendable arm 23 can be housed for example in proximity to the rotation actuator 38.

In further embodiments, which can be combined with all the embodiments described here, the cleaning apparatus 20 can comprise at least a sensor 50 to detect the position of the mobile segment 27 of the extendable arm 23 with respect to the fixed segment 28.

In further embodiments, which can be combined with all the embodiments described here, the cleaning apparatus can comprise at least a sensor 51 to detect the height at which the extendable shaft 22 is located, thus to detect the position of the mobile part 25 with respect to the fixed part 24.

In further embodiments, which can be combined with all the embodiments described here, the cleaning apparatus 20 can also comprise, as we said, the control unit 52, which is suitable, for example, to manage the various cleaning operations of the drum 36, to receive the data from the sensors 49, 50 and 51, to regulate the functioning of the drive unit 26, of the pumping unit 40, of the rotation actuator 38, of the motor 29 for extending or shortening the extendable arm 23, therefore for moving the mobile segment 27 with respect to the fixed segment 28, or other.

In further embodiments, which can be combined with all the embodiments described here, the control unit 52 can be provided with a suitable interface 53 with which an operator can adjust the various functioning parameters of the cleaning apparatus 20.

In further embodiments, which can be combined with all the embodiments described here, the cleaning apparatus 20 can also be provided, at the base, with a support base 54. The support base 54 can be configured to allow to incline the support apparatus 20 with respect to the ground, for example to allow it to be loaded into a container.

According to possible embodiments, the base 54 can be connected to a rotatable platform 72, such as a rotating table or similar rotation actuator, which allows to rotate the cleaning apparatus 20 so as to position it in proximity to several truck mixers 21, see fig. 8, or to position it correctly with respect to one truck mixer.

The platform 72 can be rotated for example around the axis Y by suitable drive means, possibly also commanded by the control unit 52, for the purposes of preliminary alignment and centering with respect to the drum 36.

According to further possible embodiments, the base 54 can comprise, or be associated with, linear translation means 73, for example linear actuators, configured to selectively determine a lateral displacement of said cleaning apparatus 20, transverse, in particular orthogonal, to the axis of development of the extendable arm 23 and therefore to the axis R of the drum 36. In this way, it is also possible to accurately position the extendable arm 23 laterally with respect to the aperture 65 of the drum 36, in order to correctly introduce it into the drum 36 itself.

By means of the linear translation means 73 the cleaning apparatus can translate to align with the truck mixer 21.

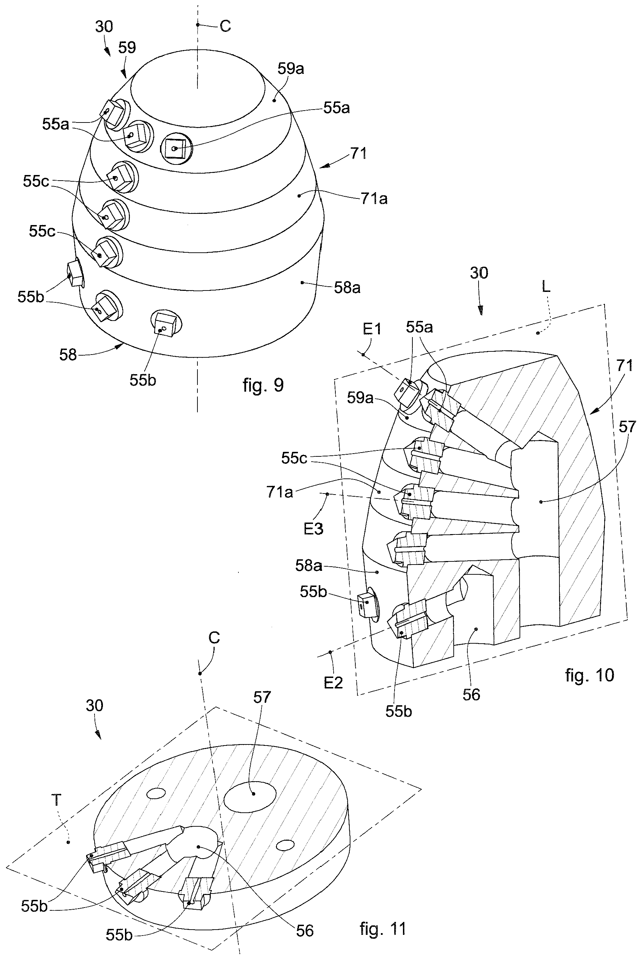

In further embodiments, combinable with all the embodiments described here, the delivery head 30, see in particular figs. 9, 10 and 11, comprises a plurality of nozzles 55a, 55b, 55c directed in a plurality of directions E1, E2 to deliver the flow of fluid that are different from each other.

For example, it is possible to provide that there is at least one set of nozzles, see for example the front nozzles 55a, inclined so as to direct the flow of cleaning fluid in at least one front direction E1 with respect to the drum 36, that is, a direction facing toward the bottom 67 of the drum 36.

In essence, the nozzles 55a are configured to direct the flow of cleaning fluid forward with respect to the direction of advance of the delivery head 30 inside the drum 36.

Moreover, the nozzles 55b are configured to direct the flow of cleaning fluid backwards with respect to the direction of feed of the delivery head 30 inside the drum 36.

For example, it is possible to provide that there is at least one set of nozzles, see for example the rear nozzles 55b, inclined so as to direct the flow of cleaning fluid in at least one rear direction E2 with respect to the drum 36, that is, a direction facing toward an aperture 65 of the drum 36 for the entry and exit of the extendable arm 23.

In possible implementations, the rear nozzles 55b can be disposed radially or fanned with respect to an axis of symmetry C of the delivery head 30 and lying, for example, on the same transverse plane T.

It is then possible to provide a set of central nozzles 55c in the delivery head 30, suitable to deliver the cleaning fluid at least in a central direction E3.

The directions E1, E2 and E3 can have their own defined angle of inclination, so as to effectively reach critical zones 11, 12, 13, associated with said spirals 61 in the drum 36 where the material mixed in the drum 36 collects and accumulates, in different measures between the various zones.

In possible implementations, the central nozzles 55c can also be inclined so as to be disposed fanned with respect to a longitudinal plane L.

The flow of cleaning or washing fluid can reach the delivery head 30 by means of one or more pipes made inside said delivery head 30. It is possible, for example, to provide a first pipe 56 to feed the cleaning fluid toward the rear nozzles 55b and a second pipe 57 to feed the cleaning fluid toward the front nozzles 55a.

In possible implementations, the central nozzles 55c can be fed by one of the pipes which feed the front or rear nozzles 55a or 55b, for example the pipe 57, or they could be provided with their own feed pipe.

In possible embodiments, the delivery head 30 can be provided shaped, for example with an ogival shape, axial-symmetric with respect to the axis of symmetry C and can therefore provide a rear end portion 58 and a front end portion 59.

In particular, the diameter of the delivery head 30 decreases passing from the rear end portion 58 to the front end portion 59.

The two end portions, respectively rear 58 and front 59 are flared converging toward the exterior, one opposite the other, so as to define, in correspondence with said rear 58 and front 59 end portions, corresponding rear 58a and front 59a surfaces inclined respectively with said second defined angle and said first defined angle, on which front and rear surfaces respectively said second set of rear nozzles 55b and said first set of front nozzles 55a are disposed.

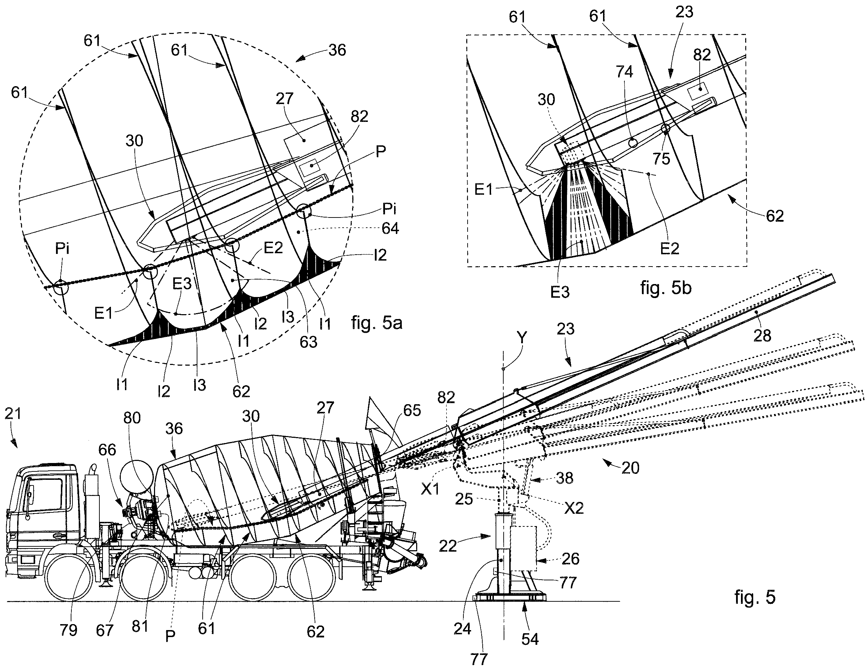

For example, it is possible to provide that the rear nozzles 55b are positioned in the rear end portion 58, suitable to deliver the flow of cleaning fluid at least in said direction E2 toward a first critical zone I1 located between two spirals 61 of the drum 36, see for example fig. 5a.

The zone I1 where the hardened material can collect is substantially defined between the front surface 63 of a spiral 61 and the internal profile 62 of the drum 36, that is, substantially the internal wall of the drum 36.

It is also possible to provide that the front nozzles 55a are positioned in the front end portion 59, suitable to deliver the flow of cleaning fluid at least in said direction E1 toward a second critical zone 12 located between two successive spirals 61 of the drum 36, see for example fig. 5a.

The zone 12 where the hardened material can collect is substantially defined between the rear surface 64 of a spiral 61 and the internal profile 62 of the drum 36.

We can, for example, suppose that the central nozzles 55c are positioned in a central portion 71 of the delivery head 30, or a zone located between the front end portion 59 and the rear end portion 58.

The central portion 71 can have a central surface 71a which connects said rear 58a and front 59a surfaces which defines said third defined angle, on which central surface 71a said third set of central nozzles 55c is disposed.

As can be seen in particular in fig. 5 and fig. 5a, the delivery head 30 is in a position close to the internal profile 62 of the drum 36 and follows a cleaning path P which substantially reproduces the shape of the internal profile 62.

The cleaning path P, substantially, reproduces the spirals positioning profile defined by the spirals 61.

The drum 36 can be rotatable around said axis R during the movement of the delivery head 30 along said cleaning path P and the simultaneous delivery of said cleaning fluid, for the internal cleaning of the drum 36 at 360°.

The cleaning path P followed in particular by the delivery head 30 of the extendable arm 23 is therefore not a rectilinear path as in known cleaning apparatuses, which develops along the longitudinal median zone of the drum, equidistant from the perimeter walls thereof, but, advantageously, it is an arched or in any case curvilinear path which, precisely, closely follows the internal profile 62 of the drum 36, copying in fact the spirals positioning profile defined by the spirals 61.

The cleaning path P can be defined substantially between the aperture 65 of the drum 36 from which the extendable arm 23 enters and the bottom 67 of the drum 36.

The cleaning path P can be characterized by, or divided into, a series of positions Pi, points or notable or reference regions, established by the control unit 52, which can have the type of truck mixer 21 detected by the video camera 43 memorized.

The positions Pi can be spatial coordinates X, Y, Z, of notable or reference points, defined within suitable tables associated with the various types of truck mixer 21.

Below is an example of Table 1 for a determinate type of truck mixer 21, for example with 30 positions Pi:

**Table 1**

| Pi | X | Y | Z | T |
|---|---|---|---|---|
| 1 | X1 | Y1 | Z1 | T1 |
| 2 | X2 | Y2 | Z2 | T2 |
| ... | | | | |
| 30 | X30 | Y30 | Z30 | T30 |

Where:
X = position relating to the forward/backward translation movement of the extendable arm 23, detected with the sensor 50;
Y = position relating to the upward/downward movement of the extendable shaft 22, detected with the sensor 51;
Z = position relating to the inclination of the extendable arm 23, detected by the sensor 49 and referred to the rotation of the extendable arm 23 around the axis R1;
T = waiting time before moving to the next position Pi.

The control unit 52 can, for example, correctly command the position of the delivery head 30, based on the memorized cleaning path P and on the basis of the data detected by the various sensors 49, 50, 51 and on the basis of the positions Pi, memorized in a determinate table of a determinate truck mixer 21, for example said Table 1.

Embodiments of the method described here thus comprise at least one cleaning step which provides at least a sub-step of introducing and advancing, inside the rotatable drum 36, the extendable arm 23 provided with the delivery head 30, able to deliver the cleaning fluid in said drum 36, and at least a sub-step of retracting and extracting the extendable arm 23 from said drum 36; the delivery head 30 of the extendable arm 23 is moved according to at least three degrees of freedom, that is, X, Y, Z, so as to follow, at least in one of said sub-steps, the cleaning path P inside the drum 36, at least during which said cleaning fluid is delivered, wherein said cleaning path P substantially reproduces the shape of the spirals positioning profile, progressively assuming a coordinated position in the vicinity of said internal profile 62 along said cleaning path P; said movement according to said at least three degrees of freedom X, Y, Z of the delivery head 30 of the extendable arm 23 along said cleaning path P is controlled and managed by the control unit 52.

In particular, the cleaning path P can be selected, as a function of the recognition step, from a plurality of pre-defined cleaning paths P memorized in said control unit 52, each of the memorized cleaning paths P is specific for a determinate type of operating machine 21; the cleaning paths are defined on the basis of the processing, by said control unit 52, of the series of reference positions Pi inside said drum 36 preliminarily detected, at least once for each type of operating machine 21, in a preparatory step of learning and acquiring said reference positions Pi by means of a video camera 43, associated with the delivery head 30 and which is moved inside said drum 36 to acquire the positions Pi.

In some embodiments, before or during said cleaning step it is provided that the control unit 52 verifies that the delivery head 30 follows the specific cleaning path P selected by the control unit 52 on the basis of signals received from one or more sensors 82 associated with the delivery head 30 and able to provide a signal correlated to the reciprocal position between the delivery head 30 and the series of positions Pi.

Consequently, in advanced embodiments, the method can provide that the type of truck mixer 21 is recognized and that the control unit 52 recalls, among the memorized cleaning paths P, a specific cleaning path P compatible with said type of truck mixer 21 or a cleaning path P which best approximates a cleaning path compatible with said type of truck mixer 21. Once the desired cleaning path P has been selected, the control unit 52 moves the delivery head 30 either to perform the actual cleaning along the selected cleaning path P, or to follow the selected cleaning path P, but without performing the cleaning yet, thus checking that the cleaning path P is suitable for the type of truck mixer 21, possibly adapting it according to needs and being able to memorize these adaptations, in order to then perform the actual cleaning along the cleaning path P verified and possibly adapted. Furthermore, it can also be provided to perform the verification, and possibly the adjustment while work is in progress, during the cleaning along the same cleaning path P selected. The control unit 52 can therefore advantageously implement self-learning and machine-learning techniques.

In some embodiments, the method comprises, prior to the cleaning step, a step of positioning, aligning and centering said extendable arm 23 with respect to said operating machine 21 so that a projection R' of the axis of rotation R of said drum 36 is centrally aligned with said extendable arm 23 with respect to a longitudinal axis Y of vertical development of said cleaning apparatus 20 (fig. 8). Furthermore, the positioning, aligning and centering step provides that said extendable arm 23 is located at a height coordinated with the drum 36 for the purposes of cleaning and that the cleaning apparatus 20 is at a predefined distance from said drum 36 compatible with said extendable arm 23 for the purposes of cleaning.

In some embodiments, the positioning, aligning and centering step is controlled and commanded by the control unit 52 on the basis of signals received from one or more sensors 76, 77 associated with the cleaning apparatus 20 and cooperating with mating indicators 78 (fig. 8) associated with the drum 36 and/or the truck mixer 21 generally, for example, on the mudguard. For example, the sensors 76, 77 are mounted on the part of the fixed structure of the cleaning apparatus 20, such as the first fixed part 24 of the extendable shaft 22 or the base 54.

In particular, in some embodiments the extendable arm 23 is initially raised to the desired height by means of the extendable shaft 22, by driving the drive unit 26.

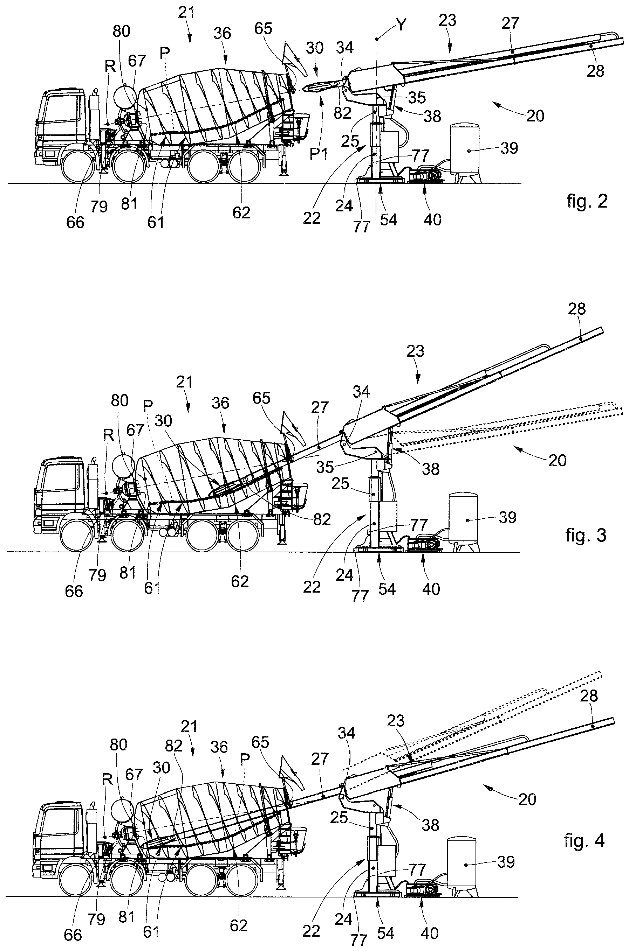

A position P1 is therefore reached, see fig. 2, wherein the extendable arm 23 is close to the entrance aperture 65 of the drum 36.

A preliminary step can be provided, in which the data in Table 1 will be acquired by moving, with the manual controls 70, the extendable arm 23 inside the barrel in all the positions Pi required and pressing, for each position, the specific acquisition pushbutton 60. The duration of the pressing of the pushbutton 60 memorizes the waiting time T in the position Pi.

To facilitate the operation the apparatus is provided with the video camera 43 which sends what has been detected toward the interface 53, from which it is also possible to follow the operations visually.

The tables for each specific truck mixer can be memorized in the memory of the control unit 52, therefore there will be a specific table with specific positions Pi for each truck mixer, identified for example on the basis of the number plate.

The data of the positions Pi and the corresponding waiting time T can also be introduced and modified by the operator through the interface 53, for example a touch-screen.

The speed of movement in the direction X can be determined for example by an inverter that commands the motor 29.

The operator will be able to, for example, select two or more speeds on the touch-screen for the movement in the direction X: for example one speed for the manual functioning in the preliminary learning and acquiring step and the other speed for the automatic functioning for cleaning.

The speeds of movement in the direction Y and the rotation Z can for example be fixed or also variable.

The movement of the extendable arm 23 is obtained by driving the motor 29 (direction X) at the predefined speed, the drive unit 26 and the rotation actuator 38 (direction Y and rotation Z). The movements in the directions X and Y and the rotation Z can be performed simultaneously (e.g. Xl-> X2, Y1-> Y2, Zl-> Z2).

Advantageously, for maximum cleaning or washing effectiveness, the delivery head 30, while it is being moved along the cleaning path P in order to be kept in an optimal relative position with respect to the spirals 61, which are also in motion, that is, in a desired position inside the spirals 61, for example by electronic-mechanical means to control the distance between the spirals 61 and to track the optimal washing angle of the jets emitted by the delivery head 30 toward the zones to be cleaned, in cooperation with the control unit 52.

This system can be implemented, in particular, by coordinating the speed of movement of the extendable arm 23 with the speed of rotation of the drum 36, detected by a suitable set of sensors connected to the operating machine 21, or truck mixer, whose data will be transmitted to the control unit 52 in order to manage the synchrony of the speeds.

In some embodiments, in particular, said delivery head 30 can therefore be moved along the cleaning path P with a speed of advance and/or retraction synchronized with the speed of movement of said spirals 61 defined by the rotation of said drum 36, so that the movement of said delivery head 30 along said cleaning path P is coordinated with the pitch of advance between two successive spirals 61.

For this purpose, in some embodiments, the delivery head 30, see fig. 5b, can be provided with detectors 74 and 75, for example electromechanical sensors, to verify the correct positioning and alignment of the delivery head 30 on the cleaning path P.

The aim is to ensure the delivery head 30, and the nozzles in particular, always move in a coordinated manner with the movement of the spirals 61, so as to emit the jets in optimal positions, that is, with the delivery head 30 in a position substantially central to the pitch of the spirals 61. If the detectors 74 and 75 detect a misalignment, they send a signal to the control unit 52 which accelerates or slows down the movement of the delivery head 30 along the cleaning path P for the head in the optimal central position, as shown in fig. 5b, for the purposes of synchronization.

Let us suppose, for example, a Case 1 in which the extendable arm 23, in particular the delivery head 30, has a speed VB equal to the speed of advance VS of the spirals 61. The detectors S1 and S2 are not driven by the spirals 61. The washing occurs in this Case 1 in an optimal way.

Let us suppose, for example, a Case 2 in which the extendable arm 23 has a speed VB lower than the speed of advance VS of the spirals 61. The detector S1 is driven by the spiral 61. The speed VB of the extendable arm 23 is increased in order to reach the speed VS and come within Case 1, that is, correct and optimal functioning.

Let us suppose, for example, a Case 3 in which the washing arm has a speed VB greater than the speed of advance VS of the spirals. The detector 75 is driven by the spiral 61. In this case, the speed VB of the extendable arm 23 is decreased in order to reach the speed VS and come within Case 1, that is, correct and optimal functioning.

It is possible to have a movement in one direction only, by setting the other coordinates as in the previous position. Once the most internal position Pi has been reached, for example in proximity to the bottom 67 of the drum 36, one returns to the starting point, continuing to scan the table until the first position with X=0, Y=0, Z=0, which identifies the end of the cycle, is reached.

The position P1 represents the "point zero" of entry into the drum 36: at the start of the cycle the extendable arm moves into position P1 (in this case the arm is still outside the barrel so there are no problems of interference).

When the movement toward position P2 starts, the pumping unit 40 is started and an electro valve, or suchlike, opens for the front nozzles 55a, which therefore start to deliver cleaning fluid in direction E1.

Once position P2 is reached, the corresponding set waiting time T starts, and an electro valve, or suchlike, of the rear nozzles 55b opens.

When the movement toward the penultimate position Pi begins, for example relating to the bottom 67 of the drum 36, the electro valve of the rear nozzles 55b closes, therefore the delivery of the cleaning fluid from the rear nozzles 55b is interrupted.

When the movement toward the last position Pi starts, the electro valve of the rear nozzles 55b closes and the electro valve of the front nozzles 55a opens for the corresponding set waiting time T.

According to the type of truck mixer 21 to be cleaned, therefore, detected for example by the video camera 43, the control unit 52 will command the movement of the delivery head 30 on the basis of the memorized cleaning path P and with the aid of the various reference points Pi.

Advantageously, the hinge 34 is moved forward and toward the delivery head 30, that is, toward the entrance aperture 65 of the drum 36, therefore the extendable arm 23 can be rotated in a precise manner limiting its angular travel, especially of its rear part, that is, the part of the extendable arm located on the opposite side of the hinge 34 with respect to the part where the delivery head 30 is positioned.

The mobile segment 27 of the extendable arm 23, therefore, follows the cleaning path P which reproduces the internal profile 62 of the drum 36 and this can be performed by adjusting the motor 29 to advance the mobile segment 27, adjusting the drive unit 26, which adjusts the height of the extendable arm 23, and adjusting the rotation actuator 38, which adjusts the inclination of the extendable arm 23 around the hinge 34.

Advantageously, the delivery of the cleaning fluid occurs both during the advance travel of the mobile segment 27 of the extendable arm 23 from the aperture 65 toward the bottom 67 of the drum 36, and also in the return travel of the mobile segment 27 from the bottom 67 to the aperture 65.

Advantageously, both during the advance step of the extendable arm 23 along the cleaning path P, and also during the retraction step, the delivery head 30 delivers the cleaning fluid in a plurality of different directions, for example the directions E1, E2, E3, so as to effectively reach any zone I1, 12, 13 of the internal profile 62 of the drum 36.

Naturally, when the extendable arm 23 is introduced into the drum 36 of the truck mixer 21, the drum 36 is rotated around an axis R by the corresponding drive means 66, so that the extendable arm 23 can clean, through the delivery head 30, the entire surface of the internal profile 62, following the cleaning path P.

In some embodiments, the synchronization of the relative movement of the delivery head 30 along the cleaning path P with respect to the movement of the spirals 61 defined by the rotation of the drum 36 occurs by varying the speed of movement of the delivery head 30 and/or the angular rotation speed of the drum 36.

In some embodiments, the cleaning apparatus 20 can be associated with a tachometer sensor 79 connected to the drum 36, in particular to the drive means 66, able to detect the angular rotation speed of the drum 36 in order to coordinate the speed of movement of the delivery head 30 along the cleaning path P.

In some embodiments, the method provides to identify the beginning of two first spirals 61 of said series of spirals 61 with respect to the direction of introduction of the delivery head 30 into the drum 36 by means of sensors 80, 81 associated with the drum 36 and in communication with the control unit 52.

At end of use, the cleaning apparatus 20 can be advantageously positioned in the transport configuration of fig. 13, by rotating the extendable arm 23 around the hinge 35, therefore without needing to remove it from the extendable shaft 22.

It is clear that modifications and/or additions of parts may be made to the apparatus and method for cleaning as described heretofore, without departing from the field and scope of the present invention.

It is also clear that, although the present invention has been described with reference to some specific examples, a person of skill in the art shall certainly be able to achieve many other equivalent forms of apparatus and method for cleaning, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method for cleaning, in particular internal washing, an operating machine (21), such as a cement mixer, a truck mixer or suchlike, comprising a drum (36) rotatable around a determinate axis (R) of rotation and having an internal surface defined by the axial-symmetric rotation of an internal profile (62) of the drum (36) around said axis (R) and in which drum (36) a series of spirals (61) for moving material are positioned, integral with the drum (36) and defining a spirals positioning profile coordinated with said internal profile (62) of the drum (36), said method providing to deliver at least one cleaning fluid in said drum (36), **characterized in that** said method comprises at least one cleaning step that uses a cleaning apparatus (20) provided with an extendable arm (23) provided with at least one delivery head (30), able to deliver said at least one cleaning fluid in said drum (36), wherein said cleaning step provides at least a sub-step of introducing and advancing, inside the rotatable drum (36), said extendable arm (23), and at least a sub-step of retracting and extracting the extendable arm (23) from said drum (36), wherein said delivery head (30) of the extendable arm (23) is moved according to at least three degrees of freedom (X, Y, Z) so as to follow, at least in one of said sub-steps, a cleaning path (P) inside the drum (36), at least during which said at least one cleaning fluid is delivered, wherein said cleaning path (P) reproduces the shape of the spirals positioning profile, said delivery head (30) progressively assuming a coordinated position in the vicinity of said internal profile (62) along said cleaning path (P), said movement according to said at least three degrees of freedom (X, Y, Z) of the delivery head (30) of the extendable arm (23) along said cleaning path (P) being controlled and managed by a control unit (52); wherein said cleaning path (P) is followed by said delivery head (30) with reference to a series of reference positions (Pi) memorized in said control unit (52).

2. Method as in claim 1, **characterized in that** said delivery head (30) delivers the cleaning fluid on the outward and return travel along said cleaning path (P), both in the step where the extendable arm (23) is introduced and advanced, and also in the step where the extendable arm (23) is retracted and extracted.

3. Method as in claim 1 or 2, **characterized in that** said delivery head (30) follows said cleaning path (P) both in the step where the extendable arm (23) is introduced and advanced, and also in the step where the extendable arm (23) is retracted and extracted.

4. Method as in any of the claims from 1 to 3, **characterized in that** said cleaning paths (P) predefined and memorized in said control unit (52) are defined on the basis of the processing, by said control unit (52), of a series of reference positions (Pi) inside said drum (36) preliminarily detected, at least once for each type of operating machine (21), in a preparatory step of learning and acquiring said reference positions (Pi) by acquisition means (43) associated with said delivery head (30) and which are moved inside said drum (36) to acquire said positions (Pi).

5. Method as in any of the claims from 1 to 4, **characterized in that** said method comprises said preparatory learning and acquiring step, in which a preliminary setting of said reference positions (Pi) is performed, introducing said extendable arm (23) into said drum (36) and setting, manually or automatically, each of said positions (Pi).

6. Method as in claim 5, **characterized in that** before or during said cleaning step it is provided that said control unit (52) verifies that said delivery head (30) follows the specific cleaning path (P) selected by said control unit (52) on the basis of signals received from one or more sensors (82) associated with said delivery head (30) and able to provide a signal correlated to the reciprocal position between said delivery head (30) and said series of positions (Pi).

7. Method as in any claim from 1 to 6, **characterized in that** said method comprises, before the cleaning step, a step of positioning, aligning and centering said extendable arm (23) with respect to said operating machine (21) so that a projection (R') of the axis of rotation (R) of said drum (36) is centrally aligned with said extendable arm (23) with respect to a longitudinal axis (Y) of vertical development of said cleaning apparatus (20), so that said extendable arm (23) is located at a height coordinated with said drum (36) for the purposes of cleaning and so that said cleaning apparatus (20) is at a predefined distance from said drum (36) compatible with said extendable arm (23) for the purposes of cleaning.

8. Method as in claim 7, **characterized in that** said positioning, aligning and centering step is controlled and commanded by said control unit (52) on the basis of signals received from one or more sensors (76, 77) associated with said cleaning apparatus (20) and cooperating with mating indicators (78) associated with said drum (36).

9. Method as in any claim from 1 to 8, **characterized in that** it comprises a preliminary step of recognizing the type of operating machine (21), hence of selecting a specific cleaning path (P) to be followed inside the drum (36) as a function of the determinate type of operating machine (21) recognized, said specific cleaning path (P) being selected from a plurality of predefined cleaning paths (P) memorized in said control unit (52), each one specific for a determinate type of operating machine (21).

10. Method as in any of the claims from 1 to 9, **characterized in that** said drum (36) is rotatable around said axis (R) during the movement of the delivery head (30) along said cleaning path (P), and the simultaneous delivery of said cleaning fluid, for the internal cleaning of the drum (36) at 360°.

11. Method as in claim 10, **characterized in that** at least during said sub-steps of said cleaning step, the delivery head (30) is moved along said cleaning path (P) with a speed of advance and/or retraction synchronized with the speed of movement of said spirals (61) defined by the rotation of said drum (36), so that the movement of said delivery head (30) along said cleaning path (P) is coordinated with the pitch of advance between successive spirals (61).

12. Method as in any claim from 1 to 11, **characterized in that** the synchronization of the relative movement of said delivery head (30) along said cleaning path (P) with respect to the movement of said spirals (61) defined by the rotation of said drum (36) occurs by varying the speed of movement of said delivery head (30) and/or the speed of angular rotation of said drum (36).

13. Method as in any claim from 1 to 12, **characterized in that** it provides to identify the beginning of two first spirals (61) of said series of spirals (61) with respect to the direction of introduction of said delivery head (30) into said drum (36) by means of sensors (80, 81) associated with said drum (36) and in communication with said control unit (52).

14. Apparatus for cleaning, in particular internal washing, an operating machine (21), such as a cement mixer, a truck mixer or suchlike, comprising a drum (36) rotatable around a determinate axis (R) and having an internal surface defined by the axial-symmetric rotation of an internal profile (62) of the drum (36) around said axis (R) and in which a series of spirals (61) for moving material are positioned, integral with the drum (36) and defining a spirals positioning profile coordinated with said internal profile (62) of the drum (36), **characterized in that** said apparatus comprises at least an extendable arm (23) provided with a delivery head (30) to deliver a cleaning fluid, said delivery head (30) being configured mobile according to at least three degrees of freedom (X, Y, Z), and at least a control unit (52) configured at least to determine a movement, according to said at least three degrees of freedom (X, Y, Z), both to introduce and advance said extendable arm (23) inside the rotatable drum (36) and also to retract and extract the extendable arm (23) from said drum (36), in order to follow a cleaning path (P) inside the drum (36), wherein said cleaning path (P) reproduces the shape of the spirals positioning profile, progressively assuming a coordinated position in the vicinity of said internal profile (62) along said cleaning path (P), wherein a series of positions (Pi) is memorized in said control unit (52) in reference to which said control unit (52) commands said extendable arm (23) to follow said cleaning path (P).

15. Cleaning apparatus as in claim 14, **characterized in that** said apparatus also comprises acquisition means (43) associated with said delivery head (30) in order to be moved inside said drum (36), wherein a plurality of predefined cleaning paths (P) are memorized in said control unit (52), each of said memorized cleaning paths (P) being specific for a determinate type of operating machine (21), said cleaning paths (P) being defined on the basis of the processing, by said control unit (52), of a series of said reference positions (Pi) inside said drum (36) preliminarily detected, at least once for each type of operating machine (21), by means of said acquisition means (43) associated with said delivery head (30) which are moved inside said drum (36) to acquire said positions (Pi); wherein said control unit (52) is configured to move said delivery head (30) along the specific cleaning path (P) inside said drum (36) selected as a function of a recognition of the type of operating machine (21) and therefore of the type of rotatable drum (36).

16. Cleaning apparatus as in claim 14 or 15, **characterized in that** said control unit (52) is configured to verify that said delivery head (30) follows the specific cleaning path (P) selected by said control unit (52) on the basis of signals received from one or more sensors (82) associated with said delivery head (30) and able to provide a signal correlated to the reciprocal position between said delivery head (30) and said series of positions (Pi).

17. Cleaning apparatus as in claim 14, 15 or 16, **characterized in that** said control unit (52) is configured, on the basis of signals received from one or more sensors (76, 77) associated with said cleaning apparatus (20) and cooperating with mating indicators (78) associated with said operating machine (21), to position, align and center said extendable arm (23) with respect to said operating machine (21) so that a projection (R') of the axis of rotation (R) of said drum (36) is centrally aligned with said extendable arm (23) with respect to a longitudinal axis (Y) of vertical development of said cleaning apparatus, so that said extendable arm (23) is located at a height coordinated with said drum (36) for the purposes of cleaning and so that said cleaning apparatus is at a predefined distance from said drum (36) compatible with said extendable arm (23) for the purposes of cleaning.

18. Cleaning apparatus as in any claim from 14 to 17, **characterized in that** said control unit (52) is configured to identify the beginning of two first spirals (61) of said series of spirals (61) with respect to the direction of introduction of said delivery head (30) into said drum (36) by means of sensors (80, 81) associated with said drum (36) and in communication with said control unit (52).

19. Program for computers that can be memorized in a computer-readable mean that contains the instructions that, once performed by an apparatus as in any claim from 14 to 18, determine the execution of the method as in any claim from 1 to 13.
